# EUROPÄISCHE PATENTSCHRIFT

(11) **EP 2 598 739 B1**
(45) Veröffentlichungstag und Bekanntmachung des Hinweises auf die Patenterteilung: **22.04.2015**
(21) Anmeldenummer: 11725345.0
(22) Anmeldetag: 11.06.2011
(51) Int. Cl.: F02D 41/00

(54) **BRENNKRAFTMASCHINE UND ZUGEHÖRIGES BETRIEBSVERFAHREN**
INTERNAL COMBUSTION ENGINE AND ASSOCIATED OPERATING METHOD
MOTEUR À COMBUSTION INTERNE ET PROCÉDÉ POUR FAIRE FONCTIONNER CE MOTEUR À COMBUSTION INTERNE

(30) Priorität: 31.07.2010 DE 102010033005
(43) Veröffentlichungstag der Anmeldung: 05.06.2013
(73) Patentinhaber: Daimler AG, 70327 Stuttgart (DE)
(72) Erfinder: SCHILLING, Markus, 70374 Stuttgart (DE); OTTO, Frank, 73734 Esslingen (DE); RÖSSLER, Klaus, 70499 Stuttgart (DE)
(74) Vertreter: JENSEN & SON
(86) Internationale Anmeldenummer: PCT/EP2011/002884
(87) Internationale Veröffentlichungsnummer: WO 2012/016608

(56) Entgegenhaltungen:
- WO-A1-2007/136142
- DE-A1-102009 018 735
- US-A1- 2009 248 271
- US-B1- 7 934 486

## Beschreibung

Die vorliegende Erfindung betrifft ein Verfahren zum Betreiben einer aufgeladenen Brennkraftmaschine, insbesondere eines Kraftfahrzeugs. Die Erfindung betrifft außerdem eine aufgeladene Brennkraftmaschine, insbesondere eines Kraftfahrzeugs.

Zur Reduzierung von Schadstoffemissionen und/oder zur Reduzierung des Kraftstoffverbrauchs ist eine Abgasrückführung, kurz AGR, allgemein bekannt. Eine Abgasrückführungsrate, kurz AGR-Rate, beschreibt dabei den Anteil des rückgeführten Abgases relativ zu der den Brennräumen der Brennkraftmaschine zugeführten Frischluft, wobei dann das Gemisch aus rückgeführtem Abgas und zugeführter Frischluft das Frischgas bzw. die Frischladung im jeweiligen Brennraum bildet. Die AGR-Rate variiert dabei üblicherweise abhängig von Last und/oder Drehzahl der Brennkraftmaschine. Insbesondere wird bei Leerlauf oder Teillast eine größere AGR-Rate eingestellt als beispielsweise bei Volllast.

Bei der Abgasrückführung wird zwischen einer externen Abgasrückführung und einer internen Abgasrückführung unterschieden. Bei einer konventionellen externen AGR wird Abgas außerhalb der Brennkraftmaschine von einer Abgasanlage abgezweigt und außerhalb der Brennkraftmaschine einer Frischluftanlage zugeführt. Die AGR erfolgt somit außerhalb der Brennkraftmaschine und insoweit extern. Im Unterschied dazu erfolgt die interne AGR im inneren bzw. innerhalb der Brennkraftmaschine. Beispielsweise kann nach einem Arbeitshub des jeweiligen Kolbens der in der Regel als Kolbenmotor ausgestalteten Brennkraftmaschine Abgas im jeweiligen Zylinder verbleiben, beispielsweise durch ein gewisses Totvolumen im Zylinder beim oberen Totpunkt des Kolbens. Der im Zylinder verbleibende Abgasanteil kann durch entsprechende Ventilschließzeiten der Gaswechselventile variiert werden. Schließt beispielsweise bei geschlossenem Einlassventil das Auslassventil früher als üblich, nimmt der im Zylinder verbleibende Abgasanteil zu. Hierbei kommt es zu einer sogenannten Zwischenkompression. Ferner ist es möglich, das jeweilige Einlassventil verfrüht, also früher als üblich zu öffnen, so dass Abgas in Richtung der Frischluftanlage aus dem jeweiligen Zylinder verdrängt wird. Dieses Abgas wird beim folgenden Saughub wieder zurückgesaugt und erhöht dadurch den Abgasanteil im Frischgas. Zusätzlich oder alternativ ist es ebenso möglich, das Auslassventil verspätet, also später als üblich zu schließen, so dass bereits aus dem Zylinder ausgetriebenes Abgas beim nächsten Saughub wieder aus der Abgasanlage bzw. aus dem der Abgasanlage zugeordneten Bereich der Brennkraftmaschine zurückgesaugt werden kann. Die vorstehend genannten Maßnahmen bilden alternativ oder kumulativ oder in beliebiger Kombination durchführbare Maßnahmen zur Realisierung einer internen AGR.

Aus der DE 10 2008 053 243 ist ein Verfahren zum Betreiben einer Brennkraftmaschine bekannt, bei dem während eines Schichtladungsbetriebs die Auslassventile beim Ladungswechsel vor einem oberen Totpunkt schließen und die Einlassventile nach einem oberen Totpunkt öffnen. Dadurch wird beim Ladungswechselvorgang Abgas im Brennraum zurückbehalten und im Schichtladungsbetrieb genutzt. Dies ist ein Beispiel für eine interne AGR mit Zwischenkompression, bei der Abgas im jeweiligen Brennraum zurückbehalten wird.

Aus der DE 10 2009 034 763 ist ein Verfahren zum Betreiben einer Brennkraftmaschine mit einer internen Abgasrückführung bekannt. Hierbei wird ein Einlassventil ein zweites Mal geöffnet, um während des Ausstoßtaktes einen Teil des Abgases in den Frischgaskanal hinauszudrücken und während eines Ansaugtaktes dieses Abgas wieder in den Brennraum hineinzusaugen und/oder durch ein zweites Öffnen und Schließen des Auslassventils während eines Ansaugtaktes in den Abgaskanal hinausgedrücktes Abgas in die Brennkammer zurückzusaugen. Dies ist ein Beispiel für eine interne AGR mit Rücksaugung aus der Frischluftseite bzw. aus der Abgasseite mit Hilfe eines zusätzlichen Öffnungsvorgangs des jeweiligen Einlassventils bzw. des jeweiligen Auslassventils.

Darüber hinaus ist es - wie oben erläutert - grundsätzlich auch möglich, den Schließzeitpunkt des jeweiligen Auslassventils und/oder den Öffnungszeitpunkt des jeweiligen Einlassventils beim Ausstoßtakt so zu verschieben, dass sich ein verfrühtes Öffnen des jeweiligen Einlassventils bzw. ein verspätetes Schließen des jeweiligen Auslassventils und somit die Möglichkeit einer Rücksaugung des Abgases aus der Frischluftseite bzw. aus der Abgasseite ergibt.

Die Vorteile der internen Abgasrückführung sind im Vergleich zur externen Abgasrückführung in einem deutlich geringeren Bauraumbedarf zu sehen. Allerdings ist der apparative Aufwand zum Verstellen der AGR-Rate bei der internen AGR deutlich größer als bei der externen AGR. Darüber hinaus besitzt die interne AGR noch die prinzipielle Eigenschaft, dass intern rückgeführtes Abgas eine deutlich höhere Temperatur aufweist als extern rückgeführtes Abgas, da bei einer externen AGR regelmäßig eine Kühlung des rückgeführten Abgases aufgrund der Leitungslänge, teilweise auch mittels eines Abgasrückführkühlers, kurz AGR-Kühler, erfolgt. Dies ist bei niedrigen und mittleren Lasten ein entscheidender Vorteil, da dadurch Gemischbildung und Entflammung unterstützt werden, somit die Restgasverträglichkeit gesteigert wird. Bei höheren Lasten aber steigt die Klopfneigung.

Ferner hat es sich bei der internen AGR als problematisch erwiesen, dass die technischen Vorrichtungen zur Darstellung der internen AGR (bspw. eine spezielle Nockenform im Rahmen einer Variabilität des Ventiltriebs) nicht an jeden Betriebspunkt optimal adaptiert werden können, vielmehr einen das ganze Kennfeld berücksichtigenden Kompromiss darstellen müssen. Das kann zur Folge haben, dass die maximale AGR-Verträglichkeit nicht in allen Betriebspunkten optimal ausgeschöpft werden kann. Moderne Brennkraftmaschinen werden bis in den mittleren Last- und Drehzahlbereich mager (Lambda > 1), im oberen Lastbereich bis zur Volllast stöchiometrisch (Lambda = 1) homogen betrieben. Im mageren Betriebsbereich oder auch Magerbereich kommt als Verbrennungsprozess in den Brennräumen der sogenannte "Schichtladungsbetrieb" zum Einsatz, bei dem im jeweiligen Brennraum, insbesondere in Verbindung mit einer Direkteinspritzung des Kraftstoffs, eine inhomogene Verteilung des Kraftstoff-Luft-Verhältnisses in der Ladung des jeweiligen Brennraums unmittelbar vor dem Verbrennungsvorgang erzeugt wird. Insbesondere ist dabei für fremdgezündete Brennkraftmaschinen vorgesehen, im Kernbereich der jeweiligen Zündeinrichtung einen größeren Lambda-Wert einzustellen, der mit zunehmendem Abstand von diesem Kernbereich abnimmt. Insoweit werden im jeweiligen Brennraum räumliche Schichten mit unterschiedlichen Lambda-Werten erzeugt. Beispielsweise kann im Kernbereich ein fettes Gemisch vorliegen, während in einem den Kernbereich umhüllenden mittleren Bereich ein mageres Gemisch vorherrscht. Ein weiterer, den mittleren Bereich umhüllender Randbereich kann sogar kraftstofffrei konfiguriert sein. In einem Übergangsbereich des Magerbereichs, zwischen Schicht- und Homogenbetrieb, kann die Brennkraftmaschine weiterhin mager in einem Homogen-Mager-Betrieb oder Homogen-Schicht-Betrieb betrieben werden. Im Homogen-Mager-Betrieb wird die Brennkraftmaschine mit einem homogenen mageren Gemisch betrieben, wobei das homogene Gemisch mit der Zündeinrichtung entflammbar ist. Im Homogen-Schicht-Betrieb sind die Brennräume mit einem homogenen mageren Gemisch gefüllt, wobei das vorhanden Magergemisch mittels einer leicht entzündlichen, fetteren Schichtladung an den jeweiligen Zündeinrichtungen entzündet wird. Insbesondere kommt es im Magerbereich mit derartigem Schichtladungsbetrieb, Homogen-Mager-Betrieb und Homogen-Schicht-Betrieb auf eine optimal eingestellte AGR-Rate an, beispielsweise um eine Überhitzung des Verbrennungsprozesses zu vermeiden, was zu erhöhten Stickoxidemissionen führen würde.

Derartige Magerbetriebsarten eignen sich in besonderer Weise für den Leerlaufbetrieb bzw. für Teillastbetriebszustände der Brennkraftmaschine. Im oberen Lastbereich und Volllastbereich wird die Brennkraftmaschine stöchiometrisch homogen (Lambda=1) betrieben, wobei hier auch eine gekühlte, externe AGR zur Vermeidung von Klopfen vorgesehen werden kann. Vorteilhafterweise kann mit der gekühlten, externen AGR die Temperatur im Brennraum abgesenkt werden und Bauteile der Brennkraftmaschine vor Überhitzung geschützt werden, so dass auf Anfetten des Gemisches zur Temperaturbeherrschung im Brennraum verzichtet werden kann, wodurch sich Vorteile im Kraftstoffverbrauch und in den Emissionen ergeben.

Die vorliegende Erfindung beschäftigt sich mit dem Problem, für Betriebsverfahren der eingangs genannten Art bzw. für eine zugehörige Brennkraftmaschine eine verbesserte Ausführungsform anzugeben, die sich insbesondere dadurch auszeichnet, dass die AGR-Rate und die Temperatur einer Frischladung besser an dem jeweiligen Betriebspunkt der Brennkraftmaschine angepasst werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, zumindest im Magerbereich mit Magerbetriebsarten gleichzeitig eine interne AGR und eine externe AGR durchzuführen, wobei im Magerbereich eine AGR-Rate der externen AGR mit zunehmender Last und/oder Drehzahl der Brennkraftmaschine erhöht wird. Durch die Erhöhung der externen AGR-Rate wird der Anteil an Abgas in dem dem jeweiligen Brennraum zugeführten Frischgas größer, wodurch automatisch der über die interne AGR realisierbare Abgasanteil im jeweiligen Brennraum entsprechend anteilig reduziert wird. Durch die Steuerbarkeit der externen AGR lässt sich die AGR-Rate besser an die unterschiedlichen Betriebspunkte der Brennkraftmaschine anpassen.

Besonders vorteilhaft ist dabei eine Ausführungsform, bei der im Magerbereich gleichzeitig eine AGR-Rate der internen AGR mit zunehmender Last und/oder Drehzahl reduziert wird. Durch entsprechende Maßnahmen, beispielsweise durch Verändern der Steuerzeiten von Gaswechselventilen, kann die interne AGR-Rate verändert werden. Eine Reduzierung der internen AGR-Rate bei zunehmender Last und/oder Drehzahl verbessert die Adaptierbarkeit der AGR an variierende Betriebspunkte der Brennkraftmaschine.

Von besonderem Vorteil ist dabei eine Ausführungsform, bei der im Magerbereich eine Gesamt-AGR-Rate, die durch die Summe aus externer AGR-Rate und interner AGR-Rate gebildet ist, mit zunehmender Last und/oder Drehzahl reduziert wird.

Besonders vorteilhaft ist somit eine Ausführungsform, bei der mit zunehmender Last und/oder Drehzahl die interne AGR-Rate stärker reduziert wird als die externe AGR-Rate erhöht wird, so dass sich insgesamt die gewünschte Abnahme der Gesamt-AGR-Rate ergibt.

Des Weiteren kann vorgesehen sein, dass die externe AGR-Rate über den gesamten Last- und/oder Drehzahlbereich des Magerbereichs kleiner ist als die interne AGR-Rate.

Gemäß einer anderen Ausführungsform kann der Magerbereich nur innerhalb eines vorbestimmten Bereichs für Last- und/oder Drehzahl vorgesehen sein, während bei größeren Lasten und/oder Drehzahlen ein Homogenbetrieb durchgeführt wird, der mit oder ohne AGR realisierbar ist.

Die externe AGR-Rate kann beispielsweise aktiv mittels eines AGR-Ventils eingestellt werden. Dies ergibt eine vergleichsweise präzise Einstellbarkeit bei vergleichsweise geringem Aufwand. Beispielsweise kann die externe AGR durch eine Niederdruck-Abgasrückführungsleitung, kurz ND-AGR-Leitung, durchgeführt werden, die eine Abgasanlage der Brennkraftmaschine stromab einer Turbine eines Abgasturboladers mit einer Frischluftanlage der Brennkraftmaschine stromauf eines Verdichters des Abgasturboladers fluidisch verbindet.

Die interne AGR-Rate kann beispielsweise passiv durch die Dynamik der Gaswechselvorgänge und/oder aktiv eingestellt werden. Die Dynamik der Gaswechselvorgänge ist durch die zur Verfügung stehenden Zeitfenster und die jeweils herrschenden Drücke bestimmt, die von den Betriebszuständen der Brennkraftmaschine abhängen und sich dadurch auf die interne AGR auswirken. Eine aktive Verstellung der internen AGR kann z. B. durch ein verfrühtes Öffnen wenigstens eines Einlassventils eines jeweiligen Zylinders der Brennkraftmaschine und/oder durch ein verspätetes Schließen wenigstens eines Auslassventils des jeweiligen Zylinders durchgeführt werden.

Insbesondere lässt sich die interne AGR dadurch realisieren, dass eine Ventilhub-Kurbelwellenwinkelkurve des jeweiligen verfrüht öffnenden Einlassventils und/oder des jeweiligen verspäteten schließenden Auslassventils zumindest vier Wendepunkte aufweist. Insbesondere kann dabei vorgesehen sein, einen Ventilhub des jeweiligen Ventils im Bereich eines oberen Totpunkts des Kolbens gegenüber dem Maximum des Ventilhubs zu reduzieren. Zusätzlich oder alternativ kann eine Ventilhub-Kurbelwellenwinkelkurve des verfrüht öffnenden Einlassventils und/oder des verspätet schließenden Auslassventils ein Plateau aufweisen. Alternativ kann die Ventilhub-Kurbelwellenwinkelkurve des verfrüht öffnenden Einlassventils und/oder des verspätet schließenden Auslassventils ein zwischen zwei Maxima angeordnetes Minimum aufweisen.

Eine aufgeladene Brennkraftmaschine, bei welcher das hier vorgestellte Betriebsverfahren realisiert werden kann, umfasst eine Abgasanlage zum Abführen von Abgas von Zylindern der Brennkraftmaschine, eine Frischluftanlage zum Zuführen von Frischluft zu den Zylindern, einen Abgasturbolader, dessen Turbine in der Abgasanlage und dessen Verdichter in der Frischluftanlage angeordnet ist, eine ND-AGR-Leitung zum fluidischen Verbinden der Abgasanlage stromab der Turbine mit der Frischluftanlage stromauf des Verdichters, Gaswechselventile zum Steuern von Gaswechselvorgängen der Zylinder und einen Ventiltrieb zum Betätigen der Gaswechselventile. Zur Realisierung der internen AGR ist der Ventiltrieb dabei so ausgestaltet, dass er zumindest im Magerbereich die interne AGR durch ein verfrühtes Öffnen wenigstens eines Einlassventils des jeweiligen Zylinders und/oder durch ein verspätetes Schließen wenigstens eines Auslassventils des jeweiligen Zylinders ermöglicht. Somit kombiniert die hier vorgestellte aufgeladene Brennkraftmaschine eine externe AGR mit einer verstellbaren internen AGR.

Vorzugsweise ist ein AGR-Ventil zum Steuern der NDR-AGR-Leitung vorgesehen, um die externe AGR-Rate einstellen zu können.

Darüber hinaus kann eine Steuereinrichtung zum Betreiben der Brennkraftmaschine vorgesehen sein, die so ausgestaltet und/oder programmiert ist, dass damit das erfindungsgemäße, vorstehend beschriebene Betriebsverfahren durchgeführt werden kann.

Entsprechend einer besonders vorteilhaften Ausführungsform kann der Ventiltrieb mit einer mehrere die Auslassventile und die Einlassventile steuernde Nocken aufweisenden Nockenwelle ausgestattet sein, wobei ein Nockenprofil eines jeweiligen Nockens so ausgebildet ist, dass eine Ventilhub-Kurbelwellenwinkelkurve eines verspätet schließenden Auslassventils und/oder eines verfrüht öffnenden Einlassventils zumindest vier Wendepunkte besitzt.

Der Ventiltrieb kann insbesondere verstellbar ausgestaltet sein, um die Schließzeiten der Gaswechselventile zum Verändern der internen AGR-Rate verschieben zu können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine Ventilhub-Kurbelwellenwinkelkurve eines Auslassventils mit verspätetem Schließen des Auslassventils,
- Fig. 2: eine Ventilhub-Kurbelwellenwinkelkurve eines Einlassventils mit verfrühtem Öffnen des Einlassventils,
- Fig. 3: eine AGR-Rate-Last-Kurve für eine interne AGR und eine externe AGR,
- Fig. 4: eine schaltplanartige Prinzipdarstellung einer aufgeladenen Brennkraftmaschine.

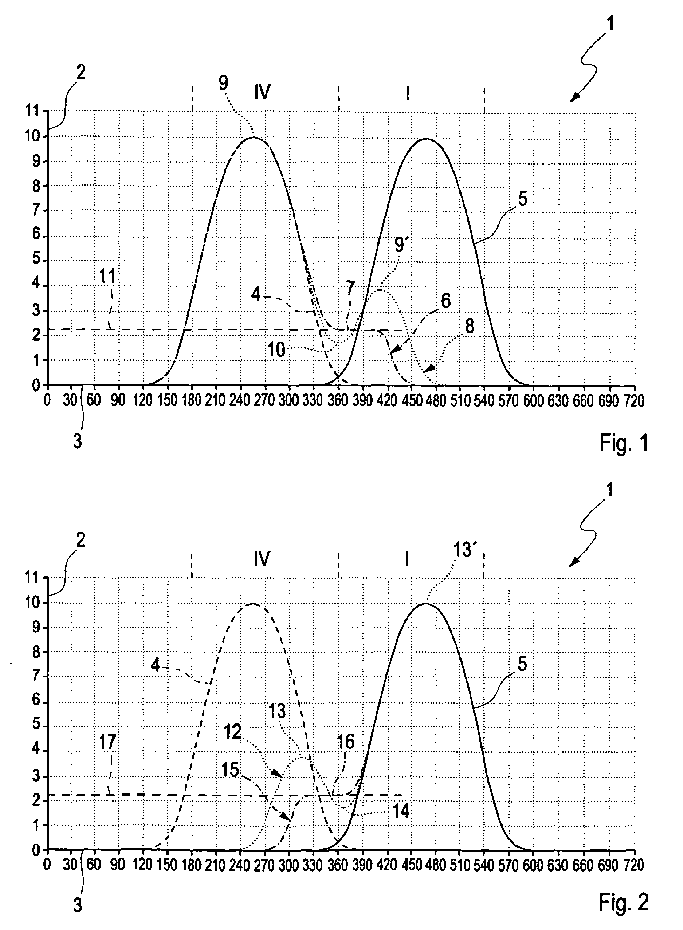

Entsprechend Fig. 1 kann eine interne AGR durch ein verspätetes Schließen eines Auslassventils realisiert werden. Zur Verdeutlichung dieser Variante der internen AGR ist in einem Diagramm 1 auf der Ordinate oder y-Achse 2 der Ventilhub des jeweiligen Ventils abgetragen, während auf der Abzisse oder x-Achse 3 der Kurbelwellenwinkel abgetragen ist. Zwischen einem Kurbelwellenwinkel von 180° bis 360° findet im Wesentlichen ein Ausstoßtakt IV statt, während zwischen einem Kurbelwellenwinkel von 360° bis 540° ein Ansaugtakt I stattfindet. Des Weiteren ist in dem Diagramm 1 eine Ventilhub-Kurbelwellenwinkelkurve 4 des Auslassventils gemäß einem Standard-Nockenprofil dargestellt. Ferner finden sich im Diagramm 1 eine Ventilhub-Kurbelwellenwinkelkurve 5 eines Einlassventils gemäß einem Standard-Nockenprofil sowie eine Ventilhub-Kurbelwellenwinkelkurve 6 des Auslassventils mit einem Plateau 7 sowie eine Ventilhub-Kurbelwellenwinkelkurve 8 des Auslassventils mit einem zwischen zwei Maxima 9, 9' angeordneten Minimum 10. Im Falle der Ventilhub-Kurbelwellenwinkelkurven 6, 8 des Auslassventils, die entweder ein Plateau 7 oder ein zwischen zwei Maxima 9, 9' angeordnetes Minimum 10 aufweisen, sind diese Ventilhub-Kurbelwellenwinkelkurven 6, 8 im Vergleich zu den mit zwei Wendepunkten ausgestatteten Ventilhub-Kurbelwellenwinkelkurven 4, 5 mit zwei zusätzlichen Wendepunkten und somit mit vier Wendepunkten ausgestattet. Ein Auslassventil, das eine solche Ventilhub-Kurbelwellenwinkelkurve 6, 8 aufweist, wird nicht gemäß einer Ventilhub-Kurbelwellenwinkelkurve 4 des konventionellen Auslassventils kontinuierlich geschlossen, sondern wird im Falle der Ventilhub-Kurbelwellenwinkelkurve 8 nach einem anfänglichen Schließen wieder etwas stärker geöffnet, wodurch sich in der Ventilhub-Kurbelwellenwinkelkurve 8 das Minimum 10 zwischen den beiden Maxima 9, 9' ergibt. Im Falle der Ventilhub-Kurbelwellenwinkelkurve 6 wird durch ein Haltern des teilweise geschlossenen Auslassventils auf einem vorbestimmten Ventilhub-Niveau 11 das Plateau 7 der Ventilhub-Kurbelwellenwinkelkurve 6 des Auslassventils erzeugt.

Beide Varianten der Ventilhub-Kurbelwellenwinkelkurven 6, 8 des Auslassventils führen im Vergleich zur konventionellen Ventilhub-Kurbelwellenwinkelkurve 4 des Auslassventils zu einem verspäteten Schließen des Auslassventils, wodurch hier eine Form der internen AGR realisiert wird, nämlich durch Rücksaugen von Abgas aus der Abgasanlage.

Eine andere Form der internen AGR ist in Fig. 2 dargestellt. Neben den konventionellen Ventilhub-Kurbelwellenwinkelkurven 4, 5 des Auslassventils bzw. des Einlassventils gemäß einem Standard-Nockenprofil sind noch eine Ventilhub-Kurbelwellenwinkelkurve 12 des Einlassventils mit einem zwischen zwei Maxima 13, 13' angeordneten Minimum 14 sowie eine Ventilhub-Kurbelwellenwinkelkurve 15 des Einlassventils mit einem Plateau 16 dargestellt. Dabei wird während des Öffnens des Einlassventils im Falle der Ventilhub-Kurbelwellenwinkelkurve 12 die Öffnungsbewegung des Einlassventils von einem teilweisen Schließen des Einlassventils unterbrochen, so dass das zwischen den beiden Maxima 13, 13' angeordnete Minimum 14 im Kurvenverlauf der Ventilhub-Kurbelwellenwinkelkurve 12 auftritt. Im Falle der Ventilhub-Kurbelwellenwinkelkurve 15 wird das teilweise geöffnete Einlassventil auf einem vorbestimmten Ventilhub-Niveau 17 gehalten, so dass das Plateau 16 im Kurvenverlauf der Ventilhub-Kurbelwellenwinkelkurve 15 auftritt.

Beide Varianten hinsichtlich der Ventilhub-Kurbelwellenwinkelkurve 12, 15 des Einlassventils führen zu einem verfrühten Öffnen des Einlassventils, wodurch hier eine andere Form der internen AGR realisiert wird, nämlich das Austreiben von Abgas in die Frischluftanlage, die beim nächsten Ansaugtakt I das ausgetriebene Abgas zusammen mit der Frischluft ansaugt.

Die beiden in den Fig. 1 und 2 erläuterten Verfahren zur internen AGR können auch miteinander kombiniert werden. Insbesondere lassen sich diese Verfahren zur Durchführung der internen AGR durch entsprechende Nockenprofile von Nocken einer Nockenwelle realisieren, die den Einlass- und Auslassventilen zugeordnet sind.

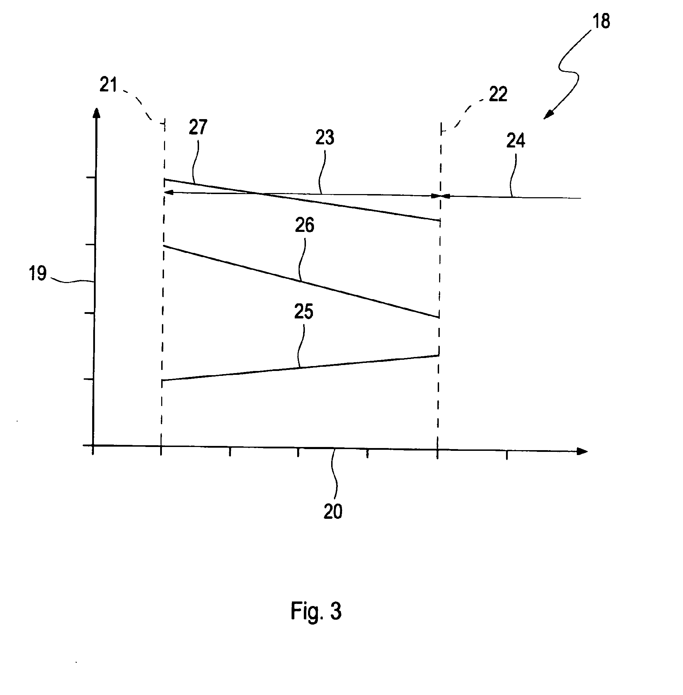

Entsprechend Fig. 3 sind in einem Diagramm 18 auf der Ordinate oder y-Achse 19 die AGR-Rate aufgetragen, während auf der Abszisse oder x-Achse 20 eine Last einer Brennkraftmaschine aufgetragen ist. Anstelle der Last kann auch eine Drehzahl der Brennkraftmaschine aufgetragen sein. Ebenso kann eine Vergleichsgröße auf der Abszisse 20 aufgetragen sein, die mit der Last und/oder mit der Drehzahl der Brennkraftmaschine korreliert.

Im Diagramm 18 befinden sich vertikale Grenzlinien 21 und 22, die eine untere Grenze 21 und eine obere Grenze 22 für einen Lastbereich 23 bzw. Drehzahlbereich 23 definieren, in dem Magerbetriebsarten wie ein Schichtladungsbetrieb, Homogen-Mager-Betrieb oder Homogen-Schicht-Betrieb durchgeführt werden sollen. Die obere Grenze 22 des Bereichs 23 bildet gleichzeitig eine untere Grenze für einen Bereich 24, in dem ein Homogenbetrieb realisiert werden soll. Da die Magerbetriebsarten innerhalb des Bereichs 23 stattfinden, wird im Folgenden auch der Magerbereich mit seinen Magerbetriebsarten mit 23 bezeichnet. Entsprechendes gilt auch für den Bereich mit Homogenbetrieb, der im Folgenden daher auch mit 24 bezeichnet wird.

Zumindest im Magerbereich 23 soll eine Abgasrückführung durchgeführt werden. Eine Kurve 25 repräsentiert dabei eine externe AGR. Eine Kurve 26 repräsentiert eine interne AGR. Ferner ist eine Kurve 27 eingetragen, welche die gesamte AGR, also die Summe aus interner AGR 26 und externer AGR 25 repräsentiert. Die Kurven 25, 26, 27 geben dabei jeweils den Verlauf der AGR-Rate abhängig von der Last bzw. Drehzahl der Brennkraftmaschine an. Im Folgenden werden daher die Kurven 25, 26, 27 mit den zugehörigen AGR-Raten gleichgesetzt, so dass die externe AGR-Rate mit 25, die interne AGR-Rate mit 26 und die Gesamt-AGR-Rate mit 27 bezeichnet werden.

Erkennbar nimmt die externe AGR-Rate 25 mit zunehmender Last und/oder mit zunehmender Drehzahl zu. Außerdem nimmt die interne AGR 26 mit zunehmender Last bzw. mit zunehmender Drehzahl ab. Dabei ist hier vorgesehen, dass die Abnahme der internen AGR 26 größer ist als die Zunahme der externen AGR 25, so dass auch die Gesamt-AGR-Rate 27 mit zunehmender Last und/oder Drehzahl abnimmt. Im Beispiel ändern sich die AGR-Raten 25, 26, 27 linear; ebenso können andere Proportionalitäten vorgesehen sein.

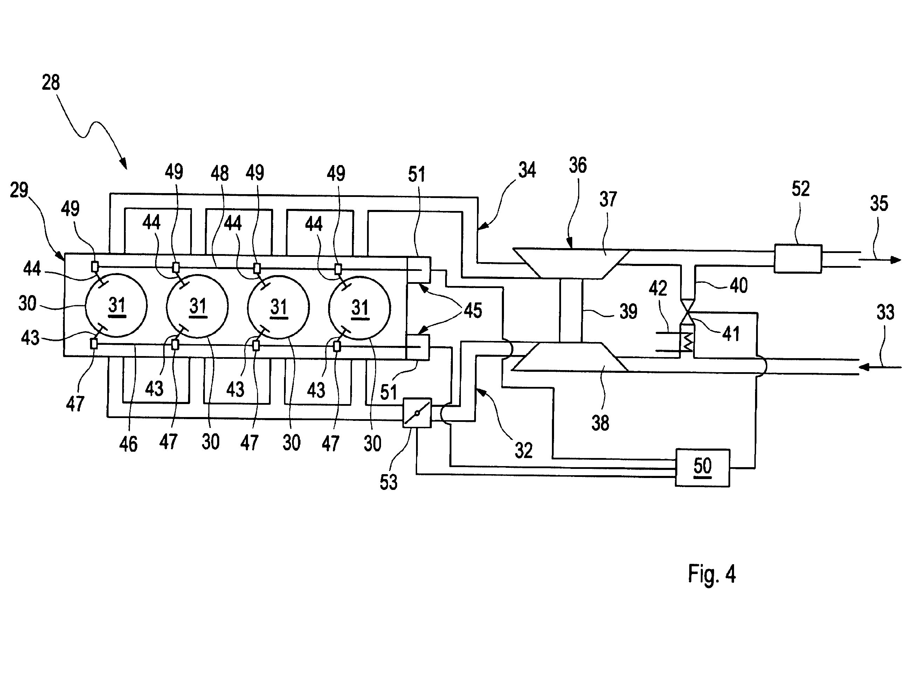

Gemäß Fig. 4 umfasst eine Brennkraftmaschine 28 einen Motorblock 29 mit mehreren Zylindern 30, die jeweils einen Brennraum 31 sowie einen im Zylinder hubverstellbaren, hier nicht dargestellten Kolben umfassen. Insoweit handelt es sich bei der Brennkraftmaschine 28 um einen Kolbenmotor. Die Brennkraftmaschine 28 umfasst außerdem eine Frischluftanlage 32, mit der durch einen Pfeil angedeutete Frischluft 33 den Zylindern 30 zugeführt werden kann. Ferner umfasst die Brennkraftmaschine 28 eine Abgasanlage 34, mit deren Hilfe durch einen Pfeil angedeutetes Abgas 35 von den Zylindern 30 abgeführt werden kann. Die Brennkraftmaschine 28 ist aufgeladen und weist hierzu einen Abgasturbolader 36 auf, der eine Turbine 37 und einen Verdichter 38 umfasst. Die Turbine 37 ist in der Abgasanlage 34 angeordnet, während der Verdichter 38 in der Frischluftanlage 32 angeordnet ist. Eine gemeinsame Welle 39 verbindet ein nicht gezeigtes Turbinenrad der Turbine 37 mit einem ebenfalls nicht gezeigten Verdichterrad des Verdichters 38.

Die Brennkraftmaschine 28 ist außerdem mit einer Niederdruck-Abgasrückführungsleitung 40 ausgestattet, die im Folgenden als ND-AGR-Leitung 40 bezeichnet wird und die eine fluidische Verbindung zwischen der Abgasanlage 34 stromab der Turbine 37 und der Frischluftanlage 32 stromauf des Verdichters 38 herstellt. Die Verbindung zwischen Frischluftanlage 32 und der Abgasanlage 34 erfolgt bezüglich des Abgasturboladers 36 niederdruckseitig. In der ND-AGR-Leitung 40 ist ein Abgasrückführventil 41 angeordnet, das im Folgenden auch als AGR-Ventil 41 bezeichnet wird. Ferner kann in der ND-AGR-Leitung 40 optional ein Abgasrückführkühler 42 angeordnet sein, der im Folgenden auch als AGR-Kühler 42 bezeichnet werden kann.

Zum Steuern der Gaswechselvorgänge der Zylinder 30 sind Gaswechselventile, nämlich Einlassventile 43 und Auslassventile 44 vorgesehen. Dabei ist jedem Zylinder 30 zumindest ein Einlassventil 43 und zumindest ein Auslassventil 44 zugeordnet. Ferner ist ein Ventiltrieb 45 zum Betätigen der Gaswechselventile 43, 44 vorgesehen. Der Ventiltrieb 45 kann für die Einlassventile 43 eine Einlassnockenwelle 46 mit Einlassnocken 47 aufweisen, welche die Einlassventile 43 betätigen. Zum Steuern der Auslassventile 44 kann der Ventiltrieb 45 eine Auslassnockenwelle 48 aufweisen, die Auslassnocken 49 trägt, welche die Auslassventile 44 betätigen.

Des Weiteren kann eine Steuereinrichtung 50 vorgesehen sei, die auf geeignete Weise zum Beispiel mit dem AGR-Ventil 41 verbunden ist. Darüber hinaus kann die Steuereinrichtung 50 mit Stelleinrichtungen 51 verbunden sein, mit denen der Ventiltrieb 45 verstellbar ist, beispielsweise um die Öffnungszeiten und/oder Schließzeiten der Einlassventile 43 und/oder der Auslassventile 44 zu variieren.

Zum Verändern der internen AGR-Rate 26 kann die Steuerung 50 mit den Stellgliedern 51 zusammenwirken. Dabei kann die interne AGR-Rate 26 vorzugsweise entsprechend den mit Bezug auf die Fig. 1 und 2 näher erläuterten Varianten durchgeführt werden.

Zum Verändern der externen AGR-Rate 25 kann die Steuereinrichtung 50 das AGR-Ventil 41 entsprechend ansteuern.

Im Beispiel der Fig. 4 ist in der Abgasanlage 34 zumindest ein Katalysator 52 angeordnet. Ferner ist in der Frischluftanlage 32 eine Drosselklappe 53 angeordnet, die zu ihrer Betätigung ebenfalls mit der Steuereinrichtung 50 verbunden sein kann.

## Patentansprüche

1. Verfahren zum Betreiben einer aufgeladenen Brennkraftmaschine (28), insbesondere eines Kraftfahrzeugs,
- bei dem zumindest im Magerbereich mit Magerbetriebsarten (23) gleichzeitig eine interne Abgasrückführung und eine externe Abgasrückführung durchgeführt werden,
- bei dem im Magerbereich (23) eine Abgasrückführrate (25) der externen Abgasrückführung mit zunehmender Last und/oder Drehzahl der Brennkraftmaschine erhöht wird und
- der Magerbereich (23) nur innerhalb eines vorbestimmten Bereichs von Last- und/oder Drehzahl durchgeführt wird, während bei größeren Lasten und/oder Drehzahlen ein Homogenbetrieb (24) durchgeführt wird.

2. Verfahren nach Anspruch 1,
**dadurch gekennzeichnet, dass**
im Magerbereich (23) gleichzeitig eine Abgasrückführrate (26) der internen Abgasrückführung mit zunehmender Last und/oder Drehzahl reduziert wird.

3. Verfahren nach Anspruch 1 oder 2,
**dadurch gekennzeichnet, dass**
im Magerbereich (23) eine Gesamt-Abgasrückführrate (27), die durch die Abgasrückführrate der externen Abgasrückführung und eine Abgasrückführrate der internen Abgasrückführung gebildet ist, mit zunehmender Last und/oder Drehzahl reduziert wird.

4. Verfahren nach einem der Ansprüche 1 bis 3,
**dadurch gekennzeichnet,**
- **dass** die Abgasrückführrate der externen Abgasrückführung aktiv mittels eines Abgasrückführventils (41) eingestellt wird, und
- **dass** die Abgasrückführrate der internen Abgasrückführung passiv durch die Dynamik der Gaswechselvorgänge und/oder aktiv eingestellt wird.

5. Verfahren nach einem der Ansprüche 1 bis 4,
**dadurch gekennzeichnet,**
- **dass** die interne Abgasrückführung durch ein verfrühtes Öffnen wenigstens eines Einlassventils (43) eines jeweiligen Zylinders (30) der Brennkraftmaschine (28) und/oder durch ein verspätetes Schließen wenigstens eines Auslassventils (44) des jeweiligen Zylinders (30) durchgeführt wird, und
- **dass** die externe Abgasrückführung durch eine Niederdruck-Abgasrückführleitung (40) durchgeführt wird, die eine Abgasanlage (34) der Brennkraftmaschine (28) stromab einer Turbine (37) eines Abgasturboladers (36) mit einer Frischluftanlage (32) der Brennkraftmaschine (28) stromauf eines Verdichters (38) des Abgasturboladers (36) fluidisch verbindet.

6. Aufgeladene Brennkraftmaschine, insbesondere eines Kraftfahrzeugs,
- mit einer Abgasanlage (34) zum Abführen von Abgas (35) von Zylindern (30) der Brennkraftmaschine (28),
- mit einer Frischluftanlage (32) zum Zuführen von Frischluft (33) zu den Zylindern (30),
- mit einem Abgasturbolader (36), dessen Turbine (37) in der Abgasanlage (34) und dessen Verdichter (38) in der Frischluftanlage (32) angeordnet ist,
- mit einer Niederdruck-Abgasrückführleitung (40) zum fluidischen Verbinden der Abgasanlage (34) stromab der Turbine (37) mit der Frischluftanlage (32) stromauf des Verdichters (38),
- mit Gaswechselventilen (43, 44) zum Steuern von Gaswechselvorgängen der Zylinder (30),
- mit einem Ventiltrieb (45) zum Betätigen der Gaswechselventile (43, 44), der so ausgestaltet ist, dass er zumindest während eines Schichtladungsbetriebs (23) eine interne Abgasrückführung durch ein verfrühtes Öffnen wenigstens eines Einlassventils (43) des jeweiligen Zylinders (30) und/oder durch ein verspätetes Schließen wenigstens eines Auslassventils (44) des jeweiligen Zylinders (30) ermöglicht und der Ventiltrieb (45) zumindest eine mehrere, die Auslassventile (44) und die Einlassventile (43) steuernde Nocken (47, 49) aufweisende Nockenwelle (46, 48) aufweist, wobei ein Nockenprofil eines jeweiligen Nockens (47, 49) so ausgebildet ist, dass eine Ventilhub-Kurbelwellenwinkelkurve (6, 8, 12, 15) eines verspätet schließenden Auslassventils (44) und/oder eines verfrüht öffnenden Einlassventils (43) zumindest vier Wendepunkte aufweist.

7. Brennkraftmaschine nach Anspruch 6,
**dadurch gekennzeichnet, dass**
ein Abgasrückführventil (41) zum Steuern der Niederdruck-Abgasrückführleitung (40) vorgesehen ist.

8. Brennkraftmaschine nach Anspruch 6 oder 7,
**dadurch gekennzeichnet, dass**
eine Steuereinrichtung (50) zum Betreiben der Brennkraftmaschine (28) nach dem Verfahren nach einem der Ansprüche 1 bis 6 vorgesehen ist.

## Claims

1. Method for operating a supercharged internal combustion engine (28), in particular of a motor vehicle,
- wherein an internal exhaust gas recirculation and an external exhaust gas recirculation are carried out simultaneously at least in the lean operating range with lean operating modes (23),
- wherein, in the lean operating range (23), an exhaust gas recirculation rate (25) of the external exhaust gas recirculation increases with increasing load and/or speed of the internal combustion engine,
- wherein the lean operating range (23) operates only within a predetermined load and/or speed range, while a homogenous operation (24) is carried out at higher loads and/or speeds.

2. Method according to claim 1,
**characterised in that**
in the lean operating range (23), an exhaust gas recirculation rate (26) of the internal exhaust gas recirculation is reduced with increasing load and/or speed.

3. Method according to claim 1 or 2,
**characterised in that**
in the lean operating range (23), an overall exhaust gas recirculation rate (27) represented by the exhaust gas recirculation rate of the external exhaust gas recirculation and an exhaust gas recirculation rate of the internal exhaust gas recirculation is reduced with increasing load and/or speed.

4. Method according to any of claims 1 to 3,
**characterised in that**
- the exhaust gas recirculation rate of the external exhaust gas recirculation is adjusted actively by means of an exhaust gas recirculation valve (41), and
- the exhaust gas recirculation rate of the internal exhaust gas recirculation is adjusted passively by the dynamics of the charge changing processes and/or actively.

5. Method according to any of claims 1 to 4,
**characterised in that**
- the internal exhaust gas recirculation is carried out by means of an early opening of at least one intake valve (43) of a respective cylinder (30) of the internal combustion engine (28) and/or by means of a delayed closing of at least one exhaust valve (44) of the respective cylinder (30), and
- the external exhaust gas recirculation is carried out by means of a low-pressure exhaust gas recirculation line (40), which fluidically connects an exhaust system (34) of the internal combustion engine (28) downstream of a turbine (37) of a turbocharger (36) to a fresh air system (32) of the internal combustion engine (28) upstream of a compressor (38) of the turbocharger (36).

6. Supercharged internal combustion engine, in particular of a motor vehicle, comprising
- an exhaust system (34) for the removal of exhaust gas (35) from cylinders (30) of the internal combustion engine (28),
- a fresh air system (32) for the supply of fresh air to the cylinders (30),
- a turbocharger (36), the turbine (37) of which is located in the exhaust system (34) and the compressor (38) of which is located in the fresh air system (32),
- a low-pressure exhaust gas recirculation line (40) for fluidically connecting the exhaust system (34) downstream of the turbine (37) to the fresh air system (32) upstream of the compressor (38),
- charge exchange valves (43, 44) for controlling charge exchange processes of the cylinders (30),
- a valve train (45) for actuating the charge exchange valves (43, 44), this being designed such that it facilitates, at least during a stratified charge mode, an internal exhaust gas recirculation by means of an early opening of at least one intake valve (43) of the respective cylinder (30) and/or by means of a delayed closing of at least one exhaust valve (44) of the respective cylinder (30), the valve train (45) comprising at least one camshaft (46, 48) with a plurality of cams (47, 49) controlling the exhaust valves (44) and the intake valves (43), wherein a cam profile of a respective cam (47, 49) is designed such that a valve lift/crankshaft angle curve (6, 8, 12, 15) of an exhaust valve (44) with delayed closing and/or an intake valve (43) with early opening has at least four inflection points.

7. Internal combustion engine according to claim 6,
**characterised in that**
an exhaust gas recirculation valve (41) is provided for controlling the low-pressure exhaust gas recirculation line (40).

8. Internal combustion engine according to claim 6 or 7, **characterised in that**
a control unit (50) is provided for operating the internal combustion engine (28) in accordance with the method according to any of claims 1 to 6.

## Revendications

1. Procédé de fonctionnement d'un moteur (28) à combustion interne suralimenté, en particulier d'un véhicule automobile,
- selon lequel au moins dans une zone de mélange pauvre un recyclage interne des gaz d'échappement et un recyclage externe des gaz d'échappement sont réalisés simultanément à l'aide de types de fonctionnement (23) en mélange pauvre,
- selon lequel dans la zone de mélange pauvre (23) un taux de recyclage des gaz d'échappement (25) du recyclage externe des gaz d'échappement est accru lorsque la charge et/ou le régime moteur du moteur à combustion interne augmentent et
- la zone de mélange pauvre (23) est réalisée uniquement dans une zone prédéfinie de la charge et/ou du régime moteur, tandis qu'un fonctionnement homogène (24) est réalisé en cas de charges et/ou de régimes moteur plus élevés.

2. Procédé selon la revendication 1, **caractérisé en ce que** dans la zone de mélange pauvre (23) un taux de recyclage des gaz d'échappement (26) du recyclage interne des gaz d'échappement est réduit simultanément lorsque la charge croissante et/ou le régime moteur croissant sont réduits.

3. Procédé selon la revendication 1 ou la revendication 2, **caractérisé en ce que** dans la zone de mélange pauvre (23) un taux total de recyclage des gaz d'échappement (27) qui est formé à partir du taux de recyclage des gaz d'échappement du recyclage externe des gaz d'échappement et du taux de recyclage des gaz d'échappement du recyclage interne des gaz d'échappement lorsque la charge croissante et/ou le régime moteur croissant diminuent.

4. Procédé selon l'une quelconque des revendications de 1 à 3, **caractérisé en ce que**
- le taux de recyclage de gaz d'échappement du recyclage externe des gaz d'échappement est réglé activement au moyen d'une soupape de recyclage de gaz d'échappement (41), et
- le taux de recyclage de gaz d'échappement du recyclage interne des gaz d'échappement est réglé activement et/ou passivement au moyen de la dynamique des processus d'échange gazeux.

5. Procédé selon l'une quelconque des revendications de 1 à 4, **caractérisé en ce que**
- le recyclage interne des gaz d'échappement est effectué par une ouverture prématurée d'au moins une soupape d'admission (43) d'un cylindre respectif (30) du moteur (28) à combustion interne et/ou par une fermeture retardée d'au moins une soupape de sortie (44) du cylindre respectif (30), et
- le recyclage externe des gaz d'échappement est effectué par une conduite de recyclage de gaz d'échappement basse pression (40), qui relie par communication fluidique une installation de gaz d'échappement (34) du moteur à combustion interne (28) en aval d'une turbine (37) d'un turbocompresseur à gaz d'échappement (36) à une installation d'air frais (32) du moteur à combustion interne (28) en amont d'un compresseur (38) du turbocompresseur à gaz d'échappement (36).

6. Moteur à combustion interne suralimenté, en particulier d'un véhicule automobile,
- doté d'une installation de gaz d'échappement (34) destinée à évacuer les gaz d'échappement (35) des cylindres (30) du moteur à combustion interne (28),
- doté d'une installation d'air frais (32) destinée à alimenter en air frais (33) les cylindres (30).
- doté d'un turbocompresseur à gaz d'échappement (36) dont la turbine (37) est disposée dans l'installation de gaz à échappement (34) et dont le compresseur (38) est disposé dans l'installation d'air frais (32),
- doté d'une conduite de recyclage de gaz d'échappement basse pression (40) destinée à relier par communication fluidique l'installation de gaz d'échappement (34) en aval de la turbine (37) à l'installation d'air frais (32) en amont du compresseur (38),
- doté de soupapes d'échange de gaz (43, 44) destinées à commander des processus d'échange de gaz des cylindres (30),
- doté d'une commande de soupape (45) destinée à actionner les soupapes d'échange de gaz (43, 44), qui est conçue de manière qu'elle permette au moins pendant un fonctionnement à charge stratifiée (23) un recyclage interne des gaz d'échappement par une ouverture prématurée d'au moins une soupape d'admission (43) du cylindre respectif (30) et/ou par une fermeture retardée d'au moins une soupape d'échappement (44) du cylindre respectif (30) et la commande de soupape (45) présente au moins un arbre à cames (46, 48) présentant plusieurs cames (47, 49) commandant les soupapes d'échappement (44) et les soupapes d'admission (43), un profil de came de chaque came respective (47, 49) étant conçu de manière qu'une courbe d'angle de vilebrequin de course de soupape (6, 8, 12, 15) d'une soupape d'échappement (44) fermée tardivement et/ou d'une soupape d'admission (43) ouverte prématurément présente au moins quatre points d'inflexion.

7. Moteur à combustion interne selon la revendication 6, **caractérisé en ce qu'**une soupape de recyclage de gaz d'échappement (41) est destinée à commander la conduite de recyclage de gaz d'échappement (40) basse pression.

8. Moteur à combustion interne selon la revendication 6 ou la revendication 7, **caractérisé en ce qu'**un dispositif de commande (50) est destiné à faire fonctionner le moteur à combustion interne (28) selon le procédé selon l'une quelconque des revendications 1 à 6.
